**Europäisches Patentamt**

(19) **European Patent Office**

**Office européen des brevets**

(11) Numéro de publication: **0 037 753**
**B1**

(12) # FASCICULE DE BREVET EUROPEEN

(45) Date de publication du fascicule du brevet:
**15.06.83**

(51) Int. Cl.³: **A 21 D 2/16,** A 21 D 2/18,
A 21 D 2/26

(21) Numéro de dépôt: **81400384.4**

(22) Date de dépôt: **13.03.81**

(54) Sucroglycérides mis sur support, leur procédé d'obtention et leur application.

(30) Priorité: **24.03.80 FR 8006463**

(43) Date de publication de la demande:
**14.10.81 Bulletin 81/41**

(45) Mention de la délivrance du brevet:
**15.06.83 Bulletin 83/24**

(84) Etats contractants désignés:
**AT BE CH DE GB IT LI LU NL SE**

(56) Documents cités:
**FR-A-1 372 646**
**FR-A-1 483 176**
**FR-A-2 067 391**
**US-A-3 060 030**

(73) Titulaire: **RHONE-POULENC SPECIALITES CHIMIQUES,
"Les Miroirs" 18, Avenue d'Alsace, F-92400 Courbevoie
(FR)**

(72) Inventeur: **Campagne, Jean-Claude, La Bernardière
Saint-Vincent la Châtre, F-79500 Melle (FR)**
Inventeur: **Chollet, Jean, 3, rue Du Teil, F-79500 Melle
(FR)**
Inventeur: **Redien, Pierre, La Pierrière Chail,
F-79500 Melle (FR)**

(74) Mandataire: **Dutruc-Rosset, Marie-Claude et al, RHONE
POULENC RECHERCHES Service Brevets Chimie et
Polymères 25, Quai Paul Doumer, F-92408 Courbevoie
Cedex (FR)**

## Sucroglycérides mis sur support, leur procédé d'obtention et leur application

La présente invention a trait à une nouvelle préparation à base de sucroglycérides sous forme de poudre par mise sur support, son procédé d'obtention et ses différentes applications qui concernent les industries de transformation des céréales et plus particulièrement les industries de cuisson des céréales.

Il est connu que par le terme »sucroglycéride«, on désigne le mélange de produits obtenus par réaction du saccharose avec des triglycérides naturels ou de synthèse et qui contient des monoglycérides, des triglycérides inaltérés (en faibles quantités), des monoesters et des diesters de saccharose en rapports variables suivant la nature du triglycéride utilisé et sa proportion mise en jeu par rapport au saccharose. Il est possible aussi que le saccharose soit combiné sous forme allant des tri- jusqu'aux octaesters. Par saccharose combiné, on entend le saccharose sous forme estérifée.

Les sucroglycérides sont doués de propriétés émulsifiantes intéressantes dues surtout aux mono- et diesters de saccharose et aux monoglycérides. Ces émulsifiants non ioniques sont totalement bio-dégradables, non toxiques, inodores, sans saveur et bien acceptés par les organismes vivants. En conséquence, ils sont utilisés en alimentation animale et humaine et plus particulièrement dans les domaines suivants:

— produits de la biscuiterie, biscotterie, pâtisserie, boulangerie.
— produits de la confiserie et de la chocolaterie.
— corps gras.
— sauces et condiments, raviolis et cannellonis, gélatines, flans et entremets.

On sait que l'utilisation des sucroglycérides dans l'industrie de la biscuiterie, biscotterie ou pâtisserie (cf. FR-A-1 483 176) permet d'obtenir des améliorations d'une part au niveau de la préparation de la pâte: temps de liaison de la pâte diminuée, temps de pétrissage plus court, incorporation du gras facilitée et travail de la pâte plus facile et d'autre part, au niveau des caractères de la pâte: texture plus fine du poduit obtenu.

La mise en oeuvre des sucroglycérides pose des problèmes aux utilisateurs en raison de la forme physique sous laquelle ils se présentent. A l'état pur, ils se présentent sous une forme cireuse très consistante ce qui impose de les faire fondre afin de les incorporer à la pâte ou pour les mettre en dispersion aqueuse si c'est sous cette forme qu'ils sont ensuite mis en jeu dans la pâte.

On a recherché une autre présentation de manipulation plus aisée et on les emploie à l'heure actuelle sous une forme pâteuse, assez fluide qui est le résultat d'une mise sous forme émulsionnée avec un support sucré. Cette forme rend les sucroglycérides plus dispersibles dans les pâtes mais n'est pas d'une manipulation très aisée. D'autre part, elle ne peut convenir pour certaines applications notamment à la fabrication de farines composées (mixes) qui nécessite une forme pulvérulente.

Il était donc souhaitable de disposer d'une présentation sous forme de poudre mieux adaptée aux conditions d'utilisation.

La difficulté qu'il y avait à surmonter était de trouver un support qui permette de conserver les propriétés intéressantes apportées par les sucroglycérides et qui, de plus, entraîne lui-même une amélioration du travail de la pâte.

Il a maintenant été trouvé et c'est ce qui constitue un des objets de la présente invention, une nouvelle préparation à base de sucroglycérides sous forme de poudre caractérisée par le fait qu'elle comprend, outre les sucroglycérides, un sel comestible de la caséine et une maltodextrine.

On a constaté de manière inattendue que la mise des sucroglycérides sous forme de poudre le support étant constitué d'un sel de caséine et d'une maltodextrine permet non seulement de conserver les propriétés amenées par les sucroglycérides mais aussi de conférer à la préparation des effets de synergie.

On se référera aux exemples pour une meilleure compréhension des effets apportés par les préparations de l'invention.

Sur le plan pratique, l'emploi de ces nouvelles préparation se traduira par:

— une meilleure homogénéité de la pâte
— une réduction de l'énergie nécessaire au pétrissage
— un rassissement retardé
— un travail des pâtes facilité
— un développement accru des produits.

Les sucroglycérides mis en jeu selon l'invention, sont obtenus par réaction de transestérification d'un triglycéride et du saccharose.

Par triglycéride, on entend un ou plusieurs triglycérides d'acides gras aliphatiques saturés ou insaturés ayant au moins 12 atomes de préférence 14 à 20 atomes de carbone. On peut évidemment partier d'un triglycéride de synthèse obtenu par réaction du glycérol et d'acides gras mais il est plus

2

intéressant pour des raisons économiques de faire appel aux triglycérides naturels qui sont des mélanges.

Comme triglycérides convenant à l'invention, on peut citer à titre d'exemples, le saindoux, le suif, l'huile d'arachide, l'huile de beurre, l'huile de graines de coton, l'huile de lin, l'huile de noix de coco, l'huile d'olive, l'huile de palme, l'huile de pépins de raisin, l'huile de poisson, l'huile de soja, l'huile de ricin, l'huile de coprah.

D'une manière préférentielle, on utilise des triglycérides d'acides gras ne contenant pas plus d'une double liaison et si nécessaire, on les soumet à une hydrogénation afin de réduire le nombre d'insaturations. Par conséquent, on peut employer des corps naturels hydrogénés, tels que par exemple le suif hydrogéné.

On peut donc mettre en oeuvre selon l'invention, des sucroglycérides obtenus par un procédé quelconque de transestérification.

La réaction du saccharose et de l'un des triglycérides précités peut être conduite dans un solvant réactionnel. Un des solvants le plus couramment utilisé est le diméthylformamide et l'on pourra se référer au brevet italien n° 650 389 qui propose de faire la réaction dans ce solvant, en présence de carbonate de potassium anhydre à une température d'environ 95°C. On a préconisé l'emploi d'autres solvants tels que la pyridine (brevet américain n° 2 831 855), les dérivés de la morpholine ou de la pipéridine (brevet américain n° 2 831 856), le diméthylsulfoxyde (brevet américain n° 2 812 324) mais l'on ne perdra pas de vue que ces différents solvants organiques y compris le diméthylformamide ne peuvent être utilisés que dans la mesure où l'on obtient des sucroglycérides tolérables d'un point de vue alimentaire et ne contenant pas d'impuretés gênantes d'un point de vue physiologique ce qui peut commander des opérations ultérieures de purification. Par exemple, dans le cas d'un procédé au diméthylformamide, la teneur résiduelle en solvant doit être inférieure à 5 p.p.m.

On peut également faire appel à des sucroglycérides obtenus selon des procédés sans solvant qui font appel soit à une fine dispersion de saccharose (certificat d'addition de brevet français n° 2 029 508) soit à une haute température telle que 190°C (brevet français n° 2 047 603), soit à de longs temps réactionnels d'environ 10 à 20 heures (brevet français n° 2 221 436).

Dans tous les cas, ces procédés devront être adaptés afin d'obtenir des sucroglycérides convenant à l'invention. Plus particulièrement, on utilisera les sucroglycérides obtenus selon un procédé parfaitement bien adapté à des fins alimentaires et qui est décrit dans FR-A-2 463 152. Ledit procédé de préparation de sucroglycérides par transestérification du saccharose et d'un triglycéride est caractérisé par le fait que l'on effectue une alcoolyse limitée du triglycéride avant réaction avec le saccharose. Selon un mode de réalisation préférentiel de l'invention, on fait réagir un triglycéride et l'éthanol en présence de carbonate de potassium à la température de reflux sous pression atmosphérique pendant 2 heures — 2 heures 30, puis l'on introduit le saccharose et le carbonate de potassium en 30 minutes environ dans le milieu réactionnel contenant déjà un savon de potassium, sous agitation et à une température de 120°C—130°C l'ensemble étant maintenu sous atmosphère de gaz inerte et l'on élève la température entre 130°C—135°C tout en établissant une pression réduite d'environ 150 mm de mercure et l'on prolonge le chauffage jusqu'à obtention d'une durée de réaction de 4 à 5 heures.

Le mélange obtenu est soit coulé et utilisé tel quel, soit neutralisé plus ou moins fortement à l'acide par exemple, acétique, phosphorique, citrique ou lactique. Il peut être purifié suivant les procédés usuels.

Quel que soit le procédé d'obtention des sucroglycérides utilisé, il est nécessaire le plus souvent de procéder à une étape de purification: on peut faire appel dans cette optique aux méthodes connues de l'art antérieur (FR-A-1 338 709 et FR-A-1 350 654).

D'une manière préférentielle, on emploie aux fins de l'invention, les sucroglycérides d'huile de palme, de saindoux, d'huile de coprah, de suif. Ils se présentent sous forme de pâtes plus ou moins consistantes et se différencient commercialement par leur point de fusion:

| | |
|---|---|
| — Sucroglycérides de saindoux | 47 à 50°C |
| — Sucroglycérides de suif | 50 à 55°C |
| — Sucroglycérides d'huile de palme | 55 à 58°C |
| — Sucroglycérides d'huile de coprah | 60 à 62°C |

Selon la présente invention, les sucroglycérides sont mis sur support consituté d'un sel comestible de la caséine et d'une maltodextrine.

Les sels comestibles de la caséine ou caséinates sont obtenus à partir de caséine pure. La caséine, principale matière albuminoïde du lait est extraite d'un lait totalement écrémé, par coagulation par la présure, par acidification par fermentation lactique ou par addition d'acide lactique ou chlorhydrique. Le caillé est lavé pour éliminer les sels minéraux, le lactose et l'excès d'acide puis mise en solution dans une base telle que la soude, la potasse, la chaux, l'ammoniaque, enfin soumis à une déshydratation.

Les caséinates sont commercialisés sous forme d'une poudre sèche contenant au moins 75% de matière protéique du lait (caséine pur ou produits d'hydrolyse), le reste étant du lactose ou des

3

impuretés (acide lactique, traces de métaux).

D'une manière préférentielle, on fait appel aux caséinates de sodium ou de potassium. La forme, la plus courante est le caséinate de sodium.

Quant aux maltodextrines, ce sont des produits pulvérulents obtenus par hydrolyse plus ou moins complète de l'amidon de maïs ou de pomme de terre. L'hydrolyse peut être réalisée par un acide (acide chlorhydrique) mais elle est le plus généralement obtenue par voie enzymatique, à l'aide d'alpha-amylase.

Le mélange hydrolysé contient du dextrose, du maltose et des oligosaccharides et polysaccharides dont les proportions varient en fonction d'une part du mode d'hydrolyse mise en jeu et d'autre part du degré d'hydrolyse.

Le degré d'hydrolyse peut être évalué par la mesure des sucres réducteurs totaux et est exprimé en dextrose équivalent (ou D. E.): le D. E. d'un produit est le nombre de grammes de sucres réducteurs considérés comme du dextrose (D — glucose chimiquement pur) pour 100 g de matières sèches du produit. Le D. E. mesure donc l'intensité de l'hydrolyse de l'amidon puisque plus le produit contient de petites molécules (telles que dextrose et maltose), plus son D. E. est élevé; au contraire, plus le produit contient des grandes molécules (polysaccharides), plus son D. E. est bas. L'échelle des D. E. est la suivante: 100 pour le dextrose, 50 pour le maltose et 0 pour l'amidon.

Les maltodextrines utilisées selon l'invention sont des produits d'hydrolyse de l'amidon ayant un faible D. E. compris entre 3 et 40 de préférence entre 6 et 30 et présentées sous forme déshydratée.

Les nouvelles préparations selon l'invention combinent ainsi les sucroglycérides à un caséinate et une maltodextrine en proportions qui peuvent varier sans inconvénient dans de larges limites. D'une manière préférentielle, les pourcentages pondéraux des différents composants de ce mélange ternaire seront choisis dans les limites suivantes:

— de 20 à 40% de sucroglycérides
— de 10 à 50% d'un caséinate
— de 20 à 60% d'un maltodextrine

la somme totale des constituants étant égale à 100% (en poids).

On ne sortira pas du cadre de la présente invention à joindre aux préparations précédemment décrites, divers adjuvants tels que la lécithine, la matière grasse etc.

Les modes d'obtention des préparations de sucroglycérides sous forme de poudre selon l'invention, sont variés.

Une première méthode de préparation consite à sécher une émulsion aqueuse de sucroglycérides, caséinate et maltodextrine.

Plus précisément, on commence par faire fondre les sucroglycérides. Par ailleurs, on prépare sous agitation et à température élevée de 60 à 80°C, une solution aqueuse de caséinate et de maltodextrine. On introduit ensuite les sucroglycérides fondus dans la solution aqueuse des supports maintenue sous agitation. Enfin, on homogénéise éventuellement l'émulsion obtenue que l'on sèche ensuite.

Les conditions opératoires sont les suivantes:

— on fond les sucroglycérides au bain-marie ou dans une cuve à double-enveloppe, à une température comprise entre 60 et 80°C.
— on prépare une solution aqueuse de caséinate et de maltodextrine ayant une teneur en matières sèches de 20 à 40% que l'on chauffe, sous agitation, jusqu'à une température de 60 à 80°C.
— on additionne lentement et sous agitation, les sucroglycérides fondus à la solution aqueuse des supports lorsqu'elle a atteint la température désirée et l'on poursuit l'agitation jusqu'à refroidissement vers 40 à 50°C.
— On obtient une émulsion que l'on homogénéise par passage dans un homogénéiseur. Cette opération consiste à forcer sous pression l'émulsion grossière, à travers des filières, des pas de vis afin de réduire la dimension des globules de sucroglycérides.
— on sèche ensuite l'émulsion fine obtenue par atomisation ou tout autre procédé équivalent. On réalise le séchage, le plus souvent, dans une tour d'atomisation à l'aide d'un courant d'air chaud dont la température varie de 150 à 240°C.
— on obtient après refroidissement, la préparation de l'invention sous forme de poudre.

Une autre voie d'obtention des préparations réside dans le mélange poudre à poudre de maltodextrine et de sucroglycérides sur support caséinate.

On fait fondre les sucroglycérides. On prépare sous agitation et à température de 60 à 80°C une solution aqueuse de caséinate. On introduit les sucroglycérides fondus dans la solution aqueuse de caséinate maintenue sous agitation. On homogénéise éventuellement l'émulsion obtenue que l'on sèche ensuite. On obtient une poudre qui est mélangée avec de la maltodextrine dans un mélangeur à poudres de type connu: mélangeurs à chute libre du type tambour, mélangeurs verticaux ou horizontaux à vis hélicoïdale, mélangeurs horizontaux type Lödige etc.

La mise des sucroglycérides sur support caséinate est réalisée dans les mêmes conditions que

4

celles décrites pour la mise sur support caséinate et maltodextrine.

Enfin, un autre procédé de fabrication desdites préparations réside dans le mélange poudre à poudre de caséinate et de sucroglycérides sur support maltodextrine.

On fait fondre les sucroglycérides. On prépare sous agitation et à température de 60 à 80°C une solution aqueuse de maltodextrine. On introduit les sucroglycérides fondus dans la solution aqueuse de maltodextrine maintenue sous agitation. On homogénéise éventuellement l'émulsion obtenue que l'on sèche ensuite. On obtient une poudre qui est mélangée avec le caséinate dans l'un des mélangeurs précités.

La mise des sucroglycérides sur support maltodextrine est conduite selon le même mode opératoire que précédemment décrit.

Les préparations de sucroglycérides sous forme de poudre selon l'invention peuvent être utilisées au cours de la fabrication d'une pâte pris dans un sens très large de mélange de farine et d'eau. C'est ainsi qu'elles peuvent être employées dans des fabrications telles que celles des flans et entremets qui peuvent être offerts au public sous forme de poudres ou celles des sauces, condiments ou des raviolis, cannellonis.

Un domaine d'application privilégié des préparations de l'invention est celui de l'industrie de cuisson des céréales:

— biscuiterie sèche; biscuits sucrés de type classique, petits beurre, galettes, casse-croûte, sablés, biscuits salés pour apéritifs, crackers.
— pâtisserie industrielle: boudoirs, champagne, langues de chat, biscuits à la cuillère, pain de gênes, génoise, madeleines, quatre-quarts, cakes, pâtisserie aux amandes, petits fours.
— biscotterie.
— pâtes feuilletées levées (croissants) et non levées (vol-auvent).
— pâtes à foncer (pâtes sablées, pâtes brisées sucrées ou non sucrées, type traiteur).

Les éléments fondamentaux présents dans les mélanges destinés aux industries précitées sont les protéines (gluten) et l'amidon qui sont les plus souvent apportés par la farine de froment. Pour la préparation des divers types de biscuits et gâteaux, on ajoute à la farine des ingrédients tels que saccharose, sel, oeufs, lait, corps gras, éventuellement levures chimiques (bicarbonate de sodium ou autres levures artificielles) ou levures biologiques et farines de céréales diverses etc.

L'incorporation des préparations des sucroglycérides selon l'invention est réalisée au cours de la fabrication en fonction du produit souhaité et est conduite selon les techniques classiques du domaine considéré (cf. J. L. KIGER et J. G. KIGER — Techniques Modernes de la Biscuiterie Pâtisserie-Boulangerie industrielles et artisanales et des produits de régime, DUNOD, Paris, 1968, Tome 2, pages 231 et suivantes).

Les préparations de sucroglycérides de l'invention peuvent être employées soit telles quellen, soit mélangées à d'autres substances pulvérulentes (lécithine) pour faciliter leur dispersion dans le milieu où elles sont incorporées.

On les introduit de préférence avec les constituants pulvérulents de la pâte c'est-à-dire dans la farine ou le saccharose ou dans le mélange des deux, en début de pétrissage.

Les quantités de préparations de l'invention, mises en jeu et exprimées en poids de sucroglycérides représentent de 0,3 à 2% du poids de farine utilisée.

Avant de détailler les exemples d'application des préparations de l'invention mettant en évidence leurs propriétés, on précisera d'abord les caractéristiques de ses constituants ainsi que leur mode d'obtention.

Les sucroglycérides utilisés à titre de matières premières sont des sucroglycérides d'huile de palme commercialisés par la Société RHONE-POULENC sous la dénomination commerciale CELYNOL MPSO 11 dont les spécifications sont les suivantes:

| | |
|---|---|
| — Sucre combiné | $19 \pm 2\%$ |
| — Sucre libre | $\leqslant 1,5\%$ |
| — Indice d'acide en mg de KOH/g | $\leqslant 8$ |
| — Indice de saponification en mg de KOH/g | $150 \pm 10$ |
| — Densité à 66°C | 0,97 |
| — Viscosité en $m^2/s$ à 98,9°C | $(210 \pm 80) \ 10^{-6}$ |
| — Zone de fusion | 50 à 60°C |

Le caséinate employé est du caséinate de sodium.
La maltodextrine mise en oeuvre a les caractéristiques suivantes:

— Composition hydrocarbonée:
| | |
|---|---|
| — dextrose | 2 |
| — maltose | 6 |
| — polysaccharides | 92 |

0 037 753

| | | |
|---|---|---|
| — amidon | | 0 |
| — Dextrose équivalent (D. E.) | | 19—21 |
| — Pouvoir rotatoire spécifique | | +175° |

Les exemples suivants illustrent la préparation des mélanges ternaires pulvérulents obtenus à partir de sucroglycérides, de caséinate de sodium, de maltodextrine qui seront ultérieurement testés dans la fabrication des pâtes. Les pourcentages sont exprimés en poids.

### 1. Préparation du mélange ternaire A

Il est obtenu par mélange poudre à poudre de maltodextrine et de sucroglycérides d'huile de palme sur support caséinate de sodium.

On réalise d'abord, la mise des sucroglycérides sur support caséinate de sodium.

On fait fondre à 75°C, 40 kg de sucroglycérides d'huile de palme dans une cuve à double-enveloppe de 100 litres munie d'un dispositif d'agitation lente.

Par ailleurs, on introduit, dans une cuve à double-enveloppe de 500 litres et équipée d'un dispositif d'agitation, 180 litres d'eau potable que l'on porte à 40°C.

On additionne sous agitation 40 kg de caséinate de sodium et l'on porte cette solution à 60°C.

On ajoute lentement, en 5 minutes, les sucroglycérides fondus à la solution aqueuse de caséinate maintenue sous agitation.

On refroidit à 40°C, tout en maintenant l'agitation.

On introduit l'émulsion obtenue dans un homogénéiseur à pression MANTON-GAULIN où l'on effectue l'homogénéisation sous une pression de 200 bars.

On réalise le séchage de l'émulsion homogénéisée dans une tour d'atomisation équipée d'un dispositif de pulvérisation à turbine, au moyen d'un courant d'air chaud à 185°C.

On récupère 65 kg de sucroglycérides sur support caséinate.

On obtient le mélange ternaire A en mélangeant 800 g de sucroglycérides sur support caséinate précédemment obtenus à 200 g de maltodextrine.

Sa composition est donc la suivante:

| | | |
|---|---|---|
| — Sucroglycérides d'huile de palme | | 40% |
| — Caséinate de sodium | | 40% |
| — Maltodextrine | | 20% |

### 2. Préparation du mélange ternaire B

On le prépare par séchage, au moyen d'un procédé d'atomisation, d'une émulsion aqueuse comportant les sucroglycérides d'huile de palme, du caséinate de sodium et la maltodextrine.

On réalise d'abord la mise des sucroglycérides sur support caséinate et maltodextrine.

On fait fondre à 70°C, 35 kg de sucroglycérides d'huile de palme dans une cuve à double-enveloppe de 100 litres munie d'un dispositif d'agitation lente.

Par ailleurs, on introduit dans une cuve à double-enveloppe de 500 litres et équipée d'un dispositif d'agitation, 200 litres d'eau potable et l'on additionne sous agitation 20 kg de caséinate de sodium et 45 kg de maltodextrine et l'on porte cette solution à 60°C.

On ajoute lentement, en 5 minutes, les sucroglycérides fondus à la solution aqueuse de caséinate et de maltodextrine maintenue sous agitation.

On refroidit à 45°C, tout en maintenant l'agitation.

On introduit l'émulsion obtenue dans un homogénéiseur à pression MANTON-GAULIN où l'on effectue l'homogénéisation sous une pression de 200 bars.

On réalise le séchage de l'émulsion homogénéisée dans une tour d'atomisation équipée d'un dispositif de pulvérisation à turbine, au moyen d'un courant d'air chaud à 185°C.

On récupère 85 kg de sucroglycérides sur support caséinate et maltodextrine ayant la composition suivante:

| | | |
|---|---|---|
| — Sucroglycérides d'huile de palme | | 35% |
| — Caséinate de sodium | | 20% |
| — Maltodextrine | | 45% |

### 3. Préparation du mélange ternaire C

Il provient du mélange poudre à poudre de caséinate de sodium sec et de sucroglycérides sur support maltodextrine.

6

Sa composition est la suivante:

— Sucroglycérides d'huile de palme 20%
— Caséinate de sodium 45%
— Maltodextrine 35%

On se reportera à la préparation du mélange ternaire A pour la mise des sucroglycérides sur support maltodextrine.

### 4. Préparation du mélange ternaire D

On l'obtient par séchage, au moyen d'un procédé d'atomisation d'une émulsion aqueuse comportant les sucroglycérides, le caséinate de sodium et la maltodextrine, dans le proportions suivantes:

— Sucroglycérides d'huile de palme 30%
— Caséinate de sodium 15%
— Maltodextrine 55%

On se référera pour les conditions opératoires à la préparation du mélange ternaire B.

L'introduction des préparations de l'invention au cours de la fabrication des pâtes modifient leurs propriétés rhéologiques et influencent leur comportement au cours de la chaîne de fabrication ainsi que les caractéristiques des produits finis obtenus.

Les exemples suivants mettent en évidence les effets de synergie apportés par le mélange ternaire de la préparation au moyen des tests classiques de détermination de caractéristiques de farines ou de pâtes.

Les paramètres étudiés sont les suivants:

— action sur le gluten mesurée avec le farinographe BRABENDER et l'alvéographe CHOPIN.
— action sur l'amidon mesurée avec l'amylographe BRABENDER.
— action sur l'activité fermentaire et la tolérance mesurée avec le zymotachygraphe CHOPIN.

On réalise à titre comparatif, un essai-témoin sans additif et un essai où les sucroglycérides sont déposés sur support sucré.

Afin de cerner le rôle des différents supports utilisés, on réalise des essais ne mettant en oeuvre que le support: caséinate, maltodextrine, support caséinate-maltodextrine, et support sucré.

Enfin, on compare l'effet des sucroglycérides sur support caséinate-maltodextrine à celui obtenu par des sucroglycérides déposés sur un seul support caséinate ou maltodextrine.

### Exemples

Pour l'ensemble des exemples qui suivent, on donne, ci-après, les caractéristiques des différents ingrédients utilisés ainsi que les conditions générales des essais.

### 1. Produits utilisés

— farine: on a utilisé un lot unique de farine. Il s'agit d'une farine de blé de type 55:
    — cendres sur matière sèche 0,53%
    — W (force) $110,10^{-4}$ joules
    — protéines 11,3%

On a contrôle que son humidité (14%) n'a pas évolué tout au long des essais.

— supports simples:
    — support sucré: c'est un sucre interverti obtenu par hydrolyse acide du saccharose — ou sucre ordinaire — et qui se présente sous l'aspect d'une pâte blanche très onctueuse dont l'analyse est la suivante:
        — brix réfractométrique 79,90
        — matières sèches 81,66%
        (dont 39,48% de dextrose, 39,48% de lévusole et 2,70% de saccharose résiduaire).

|  |  |  |
|---|---|---|
| — densité | 1,411 |
| — pH | 5,5 |

- support caséinate de sodium: le caséinate de sodium est identique à celui introduit dans les mélanges ternaires de l'invention.
- support maltodextrine: il en est de même que le caséinate de sodium.
- support caséinate-maltodextrine: la proportion de chaque constituant sera précisée dans chaque exemple.
- sucroglycérides mis sur support:
  - sucroglycérides sur support sucré: ils se présentent sous forme d'une pâte épaisse de coloration jaune ayant la composition suivante:

|  |  |
|---|---|
| — sucroglycérides d'huile de palme | 40% |
| — sucre interverti | 30% |
| — eau | 30% |

  - sucroglycérides sur support caséinate de sodium:

|  |  |
|---|---|
| — sucroglycérides d'huile de palme | 50% |
| — caséinate de sodium | 50% |

  - sucroglycérides sur support maltodextrine:

|  |  |
|---|---|
| — sucroglycérides d'huile de palme | 36,5% |
| — maltodextrine | 63,5% |

- mélanges ternaires A. B. C. D.: leur préparation et leur composition ont été données précédemment.


## 2. Conditions opératoires générales

Tous les essais sont réalisés à température ambiante constante de 22°C: les appareillages et ingrédients sont maintenus à cette température.

On respectera scrupuleusement les modes opératoires indiqués par les constructeurs des appareils utilisés: farinographe BRABENDER, alvéographe CHOPIN, amylographe BRABENDER, zymotachygraphe CHOPIN.

Les essais mettant en oeuvre les sucroglycérides sont réalisés de façon à avoir la même quantité de matière active, soit 0,8% par rapport à la farine, dose d'emploi moyenne courante dans les industries de cuisson des céréales.

Lorsque l'on utilise des sucroglycérides sur support, un poids de farine égal au poids de support mis en oeuvre est enlevé de la formule.

Dans les essais avec support seul, le même poids est mis en oeuvre, également en remplacement du poids correspondant de farine.


## Exemples 1 à 9

Dans cette série d'exemples, on met en évidence l'action des différentes formes de sucroglycérides et de leurs supports, sur le gluten par des essais réalisés au farinographe BRABENDER.

Pour ces essais, on utilise la formule suivante qui est une formule de biscuits type casse-croûte:

|  |  |
|---|---|
| — farine | 200 g |
| — carbonate d'ammonium | 4 g |
| — sel | 2 g |
| — sirop de saccharose à 50% en poids | 106 g |
| — matière grasse végétale (margarine) | 15 g |
| — produit à tester | x |

On ajoute les produits à tester suivants dans les quantités (x) ci-après définies:

- exemple 1: pas d'additif
- exemple 2: 1,6 g de support sucré
- exemple 3: 4,0 g de sucroglycérides sur support sucré
- exemple 4: 1,6 g de caséinate de sodium
- exemple 5: 2,8 g de maltodextrine
- exemple 6: 1,6 g de caséinate de sodium et 0,8 g de maltodextrine
- exemple 7: 3,2 g de sucroglycérides sur support caséinate de sodium
- exemple 8: 4,4 g de sucroglycérides sur support maltodextrine
- exemple 9: 4,0 g de mélange ternaire A.

On corrigera les quantités de farine à ajouter selon les données précédentes.

8

On conduit les essais au farinographe selon une méthode que l'on ne rappelera que succintement étant donné qu'elle est bien connue et décrite dans la littérature (cf. Contrôle de la qualité de blé — Guide pratique édité par l'Institut Technique des céréales et des fourrages — Paris, 1972, pages 145—148).

Le farinographe BRABENDER mesure et enregistre l'évolution de la consistance de la pâte au cours d'un pétrissage intensif.

Cet appareil est consitué par un pétrin dont les deux bras fonctionnant en sens inverse (type pétrisseur WERNER) sont actionnés par un moteur dynamométrique qui indique constamment le couple résistant opposé par la pâte au mouvement d'entraînement des bras. A chaque demi-tour des fraseurs, la pâte alternativement comprimée et étirée oppose un couple résistant périodiquement variable oscillant autour d'une valeur moyenne. Un tambour enregistreur synchrone donne un diagramme particulier dit farinogramme qui est une courbe indiquant la variation de la consistance de la pâte exprimée en unités BRABENDER en fonction du temps de pétrissage exprimé en minutes.

On utilise le mode opératoire suivant: on introduit dans la cuve du pétrin, les ingrédients pulvérulents: farine, carbonate d'ammonium, sel puis l'on ajoute le sirop de saccharose et l'on pétrit ensuite 2 minutes à 30 tours/minute. On additionne la matière grasse ainsi que le produit à tester. On reprend le pétrissage pendant 5 minutes à 30 tours/minute.

On exprime les résultats de la manière qui suit:

— consistance de la pâte: il s'agit de la consistance relevée sur l'enregistrement au bout du dernier pétrissage de 5 minutes.
— affaiblissement de la pâte: c'est la différence de consistance entre l'essai témoin et l'essai considéré.
— cohésion de la pâte: elle est représentée par l'épaisseur de la courbe d'enregistrement de la viscosité de la pâte, en fin de pétrissage. Un tracé large indique que la pâte est mal liée et manque d'homogénéité et de cohésion.

Les résultats des essais sont consignés dans le tableau 1.

Tableau 1

| EX. | Produits à tester | Consistance de la pâte | Affaiblissement | Cohésion de la pâte |
|---|---|---|---|---|
| | | U. B. | U. B. | U. B. |
| 1 | Témoin sans additif | 735 | | 45 |
| 2 | Support sucré | 710 | 25 | 35 |
| 3 | Sucroglycérides sur support sucré | 660 | 75 | 30 |
| 4 | Caséinate | 705 | 30 | 35 |
| 5 | Maltodextrine | 630 | 105 | 40 |
| 6 | Caséinate + Maltodextrine | 810 | — 85 | 45 |
| 7 | Sucroglycérides sur support caséinate | 830 | — 95 | 45 |
| 8 | Sucroglycérides sur support maltodextrine | 560 | 175 | 35 |
| 9 | Mélange ternaire A | 690 | 45 | 25 |

On note que sur support caséinate, les sucroglycérides donnent une consistance plus importante que l'essai témoin. Sur support sucré, la consistance est plus faible. Sur support maltodextrine, elle est nettement plus faible.

Les supports seuls, maltodextrine, caséinate ou sucre réduisent la consistance.

Le mélange caséinate-maltodextrine donne une consistance supérieure à celle de l'essai témoin.

Le mélange ternaire de l'invention donne cependent une consistance de pâte plus faible que l'essai témoin.

Pour ce qui est de la cohésion de la pâte, les sucroglycérides l'améliorent sur support sucré et sur support maltodextrine.

Ils sont sans effet sur support caséinate ou caséinate ou caséinate et maltodextrine.

Le mélange ternaire donne la meilleure cohésion, montrant un effet de synergie.

La cohésion de la pâte est un point très important dans les industries telles que la biscuiterie sèche, ou les pâtes à foncer. Le manque de cohésion amène des tensions internes au cours et après cuisson, ce qui cause des accidents de fabrication tels que la fèle.

Le pouvoir émulsifiant des sucroglycérides, très renforcé dans le mélange ternaire, rend cette préparation particulièrement apte à résoudre ces difficultés.

Un autre avantage est que, la pâte étant plus homogène, on pourra réduire la durée de pétrissage, d'où un gain d'énergie augmenté encore par le fait que la pâte sera moins visqueuse.

Exemples 10 à 14

On teste les sucroglycérides sur support par rapport à un essai-témoin sans additif, par des essais réalisés à l'alvéographe CHOPIN.

On prépare un pâton de pâte en utilisant 250 g de farine à laquelle on ajoute la quantité d'eau salée à 25 g/l de manière à obtenir une pâte ayant une hydratation constante de 50% ainsi que les quantités de produits à tester suivantes:

— exemple 10: pas d'additif
— exemple 11: 5 g de sucroglycérides sur support sucré
— exemple 12: 4 g de sucroglycérides sur support caséinate de sodium
— exemple 13: 5,5 g de sucroglycérides sur support maltodextrine
— exemple 14: 5,7 g de mélange ternaire B.

Pour une description détaillée des mesures effectuées à l'alvéographe, on se référera à la littérature (cf. Contrôle de la qualité de blé — Guide pratique édité par l'Institut des céréales et des fourrages — Paris, 1972, pages 135—143).

L'alvéographe CHOPIN permet de faire subir à une mince couche de pâte des changements de dimension, sous la poussée d'un volume d'air croissant. Il se forme une bulle et l'on enregistre la pression à l'intérieur de cette bulle en fonction du volume d'air insufflé, jusqu'à la rupture. On obtient un diagramme sur un cylindre enregistreur d'où sont tirés les caractéristiques intimement liées aux propriétés rhéologiques de la pâte.

Des corrélations empiriques montrent que la valeur P (mm) donne une bonne mesure de la tenacité (stabilité, résistance liée à l'élasticité) de la pâte tandis que la longueur L (cm) ou le gonflement G (cm³) donne une bonne mesure de l'extensibilité de la pâte avant rupture. La surface totale calculée W, mesure du travail de déformation effectué avant rupture, donne une bonne indication sur la »force« de la farine.

Les résultats des essais sont consignés dans le tableau 2.

Tableau 2

| EX. | Produits à tester | Tenacité P mm | Gonflement G cm³ | Force W $10^{-4}$ J | P/L |
|-----|-------------------|---------------|------------------|---------------------|-----|
| 10 | Témoin sans additif | 49,6 | 16,5 | 110 | 0,9 |
| 11 | Sucroglycérides sur support sucré | 45 | 18,4 | 109 | 0,67 |
| 12 | Sucroglycérides sur support caséinate | 43,8 | 17,2 | 106,5 | 0,58 |
| 13 | Sucroglycérides sur support maltodextrine | 46,2 | 17,8 | 108 | 0,81 |
| 14 | Mélange ternaire B | 39 | 20 | 107 | 0,48 |

A force pratiquement égale, on constate que la préparation ternaire modifie le plus les caractéristiques de la farine, en réduisant la ténacité, augmentant le gonflement, et surtout, en réduisant considérablement le rapport P/L.

Sur le plan de l'utilisateur, la mise en oeuvre du mélange ternaire se traduira par l'obtention d'une pâte plus douce, plus longue, d'un travail plus aisé. L'intérêt d'avoir une telle pâte est très net chaque fois que l'on a à faire à des produits de forme géométrique, pour lesquels la rétraction amène des déformations préjudiciables à la qualité du produit fini.

Exemples 15 à 23

Dans cette série d'exemples, on montre l'action de différentes formes de sucroglycérides et de leurs supports sur l'amidon, par des essais réalisés à l'amylographe BRABENDER.

On prépare une suspension de 80 g farine dans 450 cm$^3$ d'eau et l'on ajoute les quantités de produits à tester suivantes:

— exemple 15: pas d'additif
— exemple 16: 0,65 g de support sucré
— exemple 17: 1,6 g de sucroglycérides sur support sucré
— exemple 18: 0,65 g de caséinate de sodium
— exemple 19: 1,1 g de maltodextrine
— exemple 20: 1,45 g de caséinate de sodium et 1,1 g de maltodextrine
— exemple 21: 1,3 g de sucroglycérides sur support caséinate de sodium
— exemple 22: 1,75 g de sucroglycérides sur support maltodextrine
— exemple 23: 3,2 g de mélange ternaire C.

On étudie l'effet des produits à tester sur l'activité amylolytique de la farine en employant l'amylographe BRABENDER (cf. Contrôle de la qualité de blé — Guide pratique édité par l'Institut Technique des céréales et des fourrages. Paris, 1972 pages 149—152).

L'amylographe est un viscosimètre de torsion enregistrant les variations de viscosité d'une pâte de farine très liquide, soumise à une élévation régulière de température.

On observe successivement une gélification de l'amidon, une augmentation de la viscosité et l'activation de l'$\alpha$-amylase. L'empois ainsi formé se liquéfie alors peu à peu et la viscosité diminue.

La courbe de variation de la viscosité passe par un maximum dont l'ordonnée est fonction de l'activité amylolytique de la farine.

On détermine à partir de cette courbe les paramètres de gélification, les viscosités maximum et minimum de la pâte.

Les résultats des essais sont consignés dans le tableau 3.

Tableau 3

| EX. | Produits à tester | Début de gélification | | Viscosité maximum | | | Viscosité minimum |
|---|---|---|---|---|---|---|---|
| | | mn | °C | mn | °C | U. B. | U. B. |
| 15 | Témoin sans additif | 21 | 56 | 42 | 87 | 570 | 220 |
| 16 | Support sucré | 23 | 56 | 45 | 90 | 600 | 220 |
| 17 | Sucroglycérides sur support sucré | 22 | 56 | 46 | 94 | 700 | 380 |
| 18 | Caséinate | 24 | 57 | 45 | 90 | 600 | 200 |
| 19 | Maltodextrine | 22 | 57 | 44 | 91 | 610 | 200 |
| 20 | Caséinate + Maltodextrine | 23 | 57 | 45 | 91 | 560 | 200 |
| 21 | Sucroglycérides sur support caséinate | 23 | 56 | 48 | 93 | 740 | 400 |
| 22 | Sucroglycérides sur support maltodextrine | 23 | 57 | 46 | 93 | 720 | 370 |
| 23 | Mélange ternaire C | 22 | 56 | 47 | 93 | 770 | 420 |

Aucun des produits testés n'a d'effet sur le début de la gélification qui est une caractéristique propre à l'amidon de la farine mise en oeuvre.

Dans tous les cas, la viscosité maximum est obtenus plus tard et à plus haute température que l'essai témoin. Le mélange ternaire se distingue en donnant la plus grande viscosité maximum alors que les supports, seuls ou en mélange, n'ont que très peu d'effet.

La viscosité minimum est mesurée, après un séjour de la pâte à 100°C pendant 1 minute, au cours de son refroidissement qui est de 1,5°C par minute. Là encore, on remarque que les supports ont peu d'influence et que la plus grande viscosité est obtenue avec le mélange ternaire.

On constate donc que l'effet protecteur des sucroglycérides vis-à-vis de l'amidon (retard à la gélification, et attaque réduite par les amylases), est particulièrement renforcé dans la préparation ternaire.

Ces deux actions ont pour conséquence de ralentir de façon importante les phénomènes de rassissement dans les produits finis des industries de cuisson des céréales.

Exemples 24 à 32

On détermine l'action sur l'activité fermentaire et la tolérance d'une pâte, des différentes formes de sucroglycérides et de leurs supports par des essais effectués au zymotachygraphe CHOPIN.

Par ces essais, on prépare un pâton de pâte à partir de:

— farine      200 g
— sel      4 g
— levure de boulanger      4 g
— eau      110 cm³
— produit à tester      x

Les quantités de produits à tester sont identiques à celles des exemples 1 à 9 à l'exception du mélange caséinate-maltodextrine qui est introduit à raison de 0,8 g de caséinate de sodium et 2,95 g de maltodextrine et du mélange ternaire D qui est utilisé à raison de 5,3 g.

On se reportera pour plus de précisions sur l'appareil utilisé, à l'article de J. L. KIGER et J. G. KIGER (Techniques Modernes de la Biscuiterie Pâtisserie-Boulangerie industrielles et artisanales et des produits de régime, DUNOD, Paris, 1968, Tome 1, pages 128 – 131).

En résumé, le zymotachygraphe CHOPIN est un appareil qui permet d'enregistrer au cours du temps,

**0 037 753**

les deux principaux constituants des gaz formés au sein d'une pâte mise en fermentation par addition de levure biologique: l'air et le gaz carbonique.

L'appareil est essentiellement contitué d'une cuve thermostatée dans laquelle est placé l'échantillon de pâte à étudier, d'un système automatique de vannes, d'un absorbeur de gaz carbonique et d'un dispositif d'enregistrement. Le jeu de vannes combiné à l'absorbeur de gaz carbonique permet la différenciation de l'enregistrement entre le volume total de gaz refoulés de la cuve et le volume total du seul gaz carbonique. On détermine alors le coefficient de rétention qui est la quantité de gaz carbonique retenu à l'intérieur du pâton par rapport au volume gazeux total.

Le zymotachygraphe permet de suivre l'évolution de la fermentation du pâton et de voir si les produits à tester ont un effet favorable ou défavorable sur le dégagement gazeux.

Les résultats des différents essais sont rassemblés dans le tableau 4.

Tableau 4

| EX. | Produits à tester | Début de la porosité au $CO_2$ mn | Volume gazeux total $cm^3$ | Coefficient de rétention % |
|---|---|---|---|---|
| 24 | Témoin sans additif | 92 | 1578 | 71,1 |
| 25 | Support sucré | 92 | 1281 | 85,1 |
| 26 | Sucroglycérides sur support sucré | 34 | 1573 | 61,8 |
| 27 | Caséinate | 40 | 1232 | 83,1 |
| 28 | Maltodextrine | 95 | 1345 | 72,7 |
| 29 | Caséinate + Maltodextrine | 87 | 1531 | 73,7 |
| 30 | Sucroglycérides sur support caséinate | 26 | 1624 | 59,1 |
| 31 | Sucroglycérides sur support maltodextrine | 80 | 1486 | 64 |
| 32 | Mélange ternaire D | 110 | 1637 | 83,7 |

L'addition de sucroglycérides augmente la porosité de la pâte mise en évidence par l'apparition plus rapide de la fuite de gaz carbonique, que ce soit sur support caséinate, sur support maltodextrine ou support sucré.

Les supports sucré ou maltodextrine ont un comportement neutre alors que le support caséinate augmente la porosité.

Le mélange caséinate-maltodextrine favorise très légèrement la porosité.

Le mélange ternaire retarde de façon importante la porosité de la pâte d'environ 18 minutes par rapport à l'essai témoin soit 20%. On constate de manière inattendue que l'effet obtenu avec la préparation de l'invention est inversé de celui obtenu avec chacun des constituants pris seul ou en mélange.

La présence de sucroglycérides augmente le volume gazeux total alors que les supports ont tendance à le réduire.

Le mélange caséinate-maltodextrine donne un dégagement gazeux légèrement inférieur à celui de l'essai témoin. Le mélange ternaire donne le meilleur dégagement gazeux. On note donc un effet de synergie du support.

La rétention du gaz carbonique est liée à la porosité de la pâte. Les sucroglycérides diminuent la rétention lorsqu'ils sont sur support simple: sucre, caséinate ou maltodextrine.

Le mélange caséinate-maltodextrine provoque une rétention légèrement supérieure à l'essai témoin.

Le mélange ternaire conduit à l'obtention du meilleur coefficient de rétention ce qui apparaît

13

surprenant compte-tenu de l'effet inverse obtenu avec les sucroglycérides sur support simple.

L'emploi de la préparation ternaire se traduira donc par une meilleure tolérance des pâtes à la fermentation; le produit final sera plus développé et aura une structure plus aérée, du fait de la meilleure rétention gazeuse.

En récapitulant les résultats obtenus dans les exemples précédents, qui sont des moyens classiques d'étude du comportement des farines et des pâtes, on constate les faits suivants:

Le mélange ternaire sucroglycérides — caséinate — maltodextrine amène:

- Un renversement de la tendance qu'ont les sucroglycérides, les supports, les sucroglycérides sur l'un des supports, ou le mélange des supports, à favoriser la fuite de gaz au travers de la pâte. Il en résulte un coefficient de rétention amélioré.
- Une très bonne homogénéité de pâte, conjuguée à une viscosité de pâte réduite.
- Une action complexante particulièrement élevée vis-à-vis de l'amidon de la farine, qui se traduit par un retard important à la gélification, et un rôle protecteur accru vis-à-vis de l'action des amylases.
- Une modification importante du diagramme alvéographique d'une farine, notamment en réduisant de façon importante le rapport caractéristique P/L, sans modifier la force (W).

**Revendications pour les Etats Contractants: BE, CH/LI, DE, GB, IT, LU, NL, SE**

1. Nouvelle préparation à base de sucroglycérides sous forme de poudre caractérisée par le fait qu'elle comprend outre les sucroglycérides, un caséinate et une maltodextrine.

2. Nouvelle préparation selon la revendication 1 caractérisée par le fait qu'elle comprend:

- de 20 à 40% de sucroglycérides
- de 10 à 50% d'un caséinate
- de 20 à 60% d'une maltodextrine

la somme totale des constituants étant égale à 100% (en poids).

3. Nouvelle préparation selon l'une des revendications 1 et 2 caractérisée par le fait que les sucroglycérides utilisés sont des sucroglycérides d'huile de palme, de suif, de saindoux, d'huile de coprah.

4. Nouvelle préparation selon l'une des revendications 1 à 3 caractérisée par le fait que le caséinate utilisé est le caséinate de sodium.

5. Nouvelle préparation selon l'une des revendications 1 à 4 caractérisée par le fait que la maltodextrine utilisée a un dextrose équivalent compris entre 3 et 40.

6. Nouvelle préparation selon la revendication 5 caractérisée par le fait que la maltodextrine utilisée a un dextrose équivalent compris entre 6 et 30.

7. Procédé d'obtention de la nouvelle préparation à base de sucroglycérides sous forme de poudre telle que décrite dans l'une des revendications 1 à 6, caractérisé par le fait qu'il consiste:

- soit à sécher une émulsion aqueuse de sucroglycérides, caséinate et maltodextrine.
- soit à faire le mélange poudre à poudre de maltodextrine et de sucroglycérides sur support caséinate.
- soit à faire le mélange poudre à poudre de caséinate et de sucroglycérides sur support maltodextrine.

8. Procédé selon la revendication 7 caractérisé par le fait qu'il consiste à faire fondre les sucroglycérides; à préparer sous agitation et à température de 60 à 80°C, une solution aqueuse de caséinate et de maltodextrine; à introduire les sucroglycérides fondus dans la solution aqueuse de caséinate et de maltodextrine maintenue sous agitation; à homogénéiser éventuellement l'émulsion obtenue puis à la sécher.

9. Procédé selon la revendication 7 caractérisé par le fait qu'il consiste à faire fondre les sucroglycérides; à préparer sous agitation et à température de 60 à 80°C une sulution aqueuse de caséinate; à introduire les sucroglycérides fondus dans la solution aqueuse de caséinate maintenue sous agitation; à homogénéiser éventuellement l'émulsion obtenue puis à la sécher afin d'obtenir les sucroglycérides sur support caséinate; à les mélanger ensuite avec de la maltodextrine.

10. Procédé selon la revendication 7 caractérisé par le fait qu'il consiste à faire fondre les sucroglycérides; à préparer sous agitation et à température de 60 à 80°C une solution aqueuse de maltodextrine; à introduire les sucroglycérides fondus dans la solution aqueuse de maltodextrine maintenue sous agitation; à homogénéiser éventuellement l'émulsion obtenue puis à la sécher afin d'obtenir les sucroglycérides sur support maltodextrine; à les mélanger ensuite avec du caséinate.

11. Procédé selon la revendication 8 caractérisé par le fait que l'on fond les sucroglycérides au bain-marie ou dans une cuve à double-enveloppe, à une température comprise entre 60 et 80°C; que

0 037 753

l'on prépare une solution aqueuse de caséinate et de maltodextrine ayant une teneur en matières sèches de 20 à 40% que l'on chauffe, sous agitation, jusqu'à une température de 60 à 80°C; que l'on additionne lentement et sous agitation, les sucroglycérides fondus à la solution aqueuse des supports lorsqu'elle a atteint la température désirée et l'on poursuit l'agitation jusqu'à refroidissement vers 40 à 50°C; que l'on homogénéise l'émulsion obtenue par passage dans un homogénéiseur; que l'on sèche ensuite l'émulsion fine obtenue par atomisation dans une tour d'atomisation à l'aide d'un courant d'air chaud dont la température varie de 150 à 240°C; que l'on obtient après refroidissement, la préparation de l'invention sous forme de poudre.

12. Procédé selon la revendication 9, caractérisé par le fait que l'on fond les sucroglycérides au bain-marie ou dans une cuve à double-enveloppe, à une température comprise entre 60 et 80°C; que l'on prépare une solution aqueuse de caséinate ayant une teneur en matières sèches de 20 à 40% que l'on chauffe, sous agitation, jusqu'à une température de 60 à 80°C; que l'on additionne lentement et sous agitation, les sucroglycérides fondus à la solution aqueuse du support lorsqu'elle a atteint la température désirée et l'on poursuit l'agitation jusqu'à refroidissement vers 40 à 50°C; que l'on homogénéise l'émulsion obtenue par passage dans un homogénéiseur; que l'on sèche ensuite l'émulsion fine obtenue par atomisation dans une tour d'atomisation à l'aide d'un courant d'air chaud dont la température varie de 150 à 240°C; que l'on obtient après refroidissement, une poudre qui est mélangée avec de la maltodextrine dans un mélangeur à poudres conduisant ainsi à la préparation de l'invention sous forme de poudre.

13. Procédé selon la revendication 10 caractérisé par le fait que l'on fond les sucroglycérides au bain-marie ou dans une cuve à double-enveloppe, à une température comprise entre 60 et 80°C; que l'on prépare une solution aqueuse de maltodextrine ayant une teneur en matières sèches de 20 à 40% que l'on chauffe, sous agitation, jusqu'à une température de 60 à 80°C; que l'on additionne lentement et sous agitation, les sucroglycérides fondus à la solution aqueuse du support lorsqu'elle a atteint la température désirée et l'on poursuit l'agitation jusqu'à refroidissement vers 40 à 50°C; que l'on homogénéise l'émulsion obtenue par passage dans un homogénéiseur; que l'on sèche ensuite l'émulsion fine obtenue par atomisation dans une tour d'atomisation à l'aide d'un courant d'air chaud dont la température varie de 150 à 240°C; que l'on obtient après refroidissement, une poudre qui est mélangée avec du caséinate dans un mélangeur à poudres conduisant ainsi à la préparation de l'invention sous forme de poudre.

14. Application de la nouvelle préparation à base de sucroglycérides sous forme de poudre selon l'une des revendications 1 à 6 au cours de la fabrication d'une pâte dans l'industrie de cuisson des céréales concernant:

— biscuiterie sèche; biscuits sucrés de type classique, petits beurre, galettes, casse-croûte, sablés, biscuits salés pour apéritifs, crackers.
— pâtisserie industrielle: boudoirs, champagne, langues de chat, biscuits à la cuillère, pain de gênes, génoise, madeleines, quatre-quarts, cakes, pâtisserie aux amandes, petits fours.
— biscotterie.
— pâtes feuilletées levées (croissants) et non levées (vol-auvent).
— pâtes à foncer (pâtes sablées, pâtes brisées sucrées ou non sucrées, type traiteur).

15. Application selon la revendication 14 caractérisée par le fait que l'on incorpore la préparation de l'invention exprimée en sucroglycérides à raison de 0,3% à 2% du poids de farine utilisée.

**Revendications pour l'Etat Contractant: AT**

1. Procédé d'obtention d'une nouvelle préparation à base de sucroglycérides sous forme de poudre caractérisé par le fait qu'il consiste:

— soit à sécher une émulsion aqueuse de sucroglycérides, caséinate et maltodextrine.
— soit à faire le mélange poudre à poudre de maltodextrine et de sucroglycérides sur support caséinate.
— soit à faire le mélange poudre à poudre de caséinate et de sucroglycérides sur support maltodextrine.

2. Procédé selon la revendication 1 caractérisé par le fait qu'il consiste à faire fondre les sucroglycérides; à préparer sous agitation et à température de 60 à 80°C, une solution aqueuse de caséinate et de maltodextrine; à introduire les sucroglycérides fondus dans la solution aqueuse de caséinate et de maltodextrine maintenue sous agitation; à homogénéiser éventuellement l'émulsion obtenue puis à la sécher.

3. Procédé selon la revendication 1 caractérisé par le fait qu'il consiste à faire fondre les sucroglycérides; à préparer sous agitation et à température de 60 à 80°C une solution aqueuse de caséinate; à introduire les sucroglycérides fondus dans la solution aqueuse de caséinate maintenue

15

sous agitation; à homogénéiser éventuellement l'émulsion obtenue puis à la sécher afin d'obtenir les sucroglycérides sur support caséinate; à les mélanger ensuite avec de la maltodextrine.

4. Procédé selon la revendication 1 caractérisé par le fait qu'il consiste à faire fondre les sucroglycérides; à préparer sous agitation et à température de 60 à 80°C une solution aqueuse de maltodextrine; à introduire les sucroglycérides fondus dans la solution aqueuse de maltodextrine maintenue sous agitation; à homogénéiser éventuellement l'émulsion obtenue puis à la sécher afin d'obtenir les sucroglycérides sur support maltodextrine; à les mélanger ensuite avec du caséinate.

5. Procédé selon la revendication 2 caractérisé par le fait que l'on fond les sucroglycérides au bain-marie ou dans une cuve à double-enveloppe, à une température comprise entre 60 et 80°C; que l'on prépare une solution aqueuse de caséinate et de maltodextrine ayant une teneur en matières sèches de 20 à 40% que l'on chauffe, sous agitation, jusqu'à une température de 60 à 80°C; que l'on additionne lentement et sous agitation, les sucroglycérides fondus à la solution aqueuse des supports lorsqu'elle a atteint la température désirée et l'on poursuit l'agitation jusqu'à refroidissement vers 40 à 50°C; que l'on homogénéise l'émulsion obtenue par passage dans un homogénéiseur; que l'on sèche ensuite l'émulsion fine obtenue par atomisation dans une tour d'atomisation à l'aide d'un courant d'air chaud dont la température varie de 150 à 240°C; que l'on obtient après refroidissement, la préparation de l'invention sous forme de poudre.

6. Procédé selon la revendication 3 caractérisé par le fait que l'on fond les sucroglycérides au bain-marie ou dans une cuve à double-enveloppe, à une température comprise entre 60 et 80°C; que l'on prépare une solution aqueuse de caséinate ayant une teneur en matières sèches de 20 à 40% que l'on chauffe, sous agitation, jusqu'à une température de 60 à 80°C; que l'on additionne lentement et sous agitation, les sucroglycérides fondus à la solution aqueuse du support lorsqu'elle a atteint la température désirée et l'on poursuit l'agitation jusqu'à refroidissement vers 40 à 50°C; que l'on homogénéise l'émulsion obtenue par passage dans un homogénéiseur; que l'on sèche ensuite l'émulsion fine obtenue par atomisation dans une tour d'atomisation à l'aide d'un courant d'air chaud dont la température varie de 150 à 240°C; que l'on obtient après refroidissement, une poudre qui est mélangée avec de la maltodextrine dans un mélangeur à poudres conduisant ainsi à la préparation de l'invention sous forme de poudre.

7. Procédé selon la revendication 4 caractérisé par le fait que l'on fond les sucroglycérides au bain-marie ou dans une cuve à double-enveloppe, à une température comprise entre 60 et 80°C; que l'on prépare une solution aqueuse de maltodextrine ayant une teneur en matières sèches de 20 à 40% que l'on chauffe, sous agitation, jusqu'à une température de 60 à 80°C; que l'on additionne lentement et sous agitation, les sucroglycérides fondus à la solution aqueuse du support lorsqu'elle a atteint la température désirée et l'on poursuit l'agitation jusqu'à refroidissement vers 40 à 50°C; que l'on homogénéise l'émulsion obtenue par passage dans un homogénéiseur; que l'on sèche ensuite l'émulsion fine obtenue par atomisation dans une tour d'atomisation à l'aide d'un courant d'air chaud dont la température varie de 150 à 240°C; que l'on obtient après refroidissement, une poudre qui est mélangée avec du caséinate dans un mélangeur à poudres conduisant ainsi à la préparation de l'invention sous forme de poudre.

8. Procédé selon l'une des revendications 1 à 7 caractérisé par le fait que l'on met en oeuvre des sucroglycérides, un caséinate et une maltodextrine en une quantité telle que l'on obtienne une préparation ayant la composition suivante:

— de 20 à 40% de sucroglycérides
— de 10 à 50% d'un caséinate
— de 20 à 60% d'une maltodextrine

la somme totale des constituants étant égale à 100% (en poids).

9. Procédé selon l'une des revendications 1 à 8 caractérisé par le fait que les sucroglycérides utilisés sont des sucroglycérides d'huile de palme, de suif, de saindoux, d'huile de coprah.

10. Procédé selon l'une des revendications 1 à 9 caractérisé par le fait que le caséinate utilisé est le caséinate de sodium.

11. Procédé selon l'une des revendications 1 à 10 caractérisé par le fait que la maltodextrine utilisée a un dextrose équivalent compris entre 3 et 40.

12. Procédé selon la revendication 11 caractérisé par le fait que la maltodextrine utilisée a un dextrose équialent compris entre 6 et 30.

13. Application d'une nouvelle préparation à base de sucroglycérides sous forme de poudre obtenue selon le procédé décrit dans l'une des revendications 1 à 12 au cours de la fabrication d'une pâte dans l'industrie de cuisson des céréales concernant:

— biscuiterie sèche; biscuits sucrés de type classique, petits beurre, galettes, casse-croûte, sablés, biscuits salés pour apéritifs, crackers.
— pâtisserie industrielle: boudoirs, champagne, langues de chat, biscuits à la cuillère, pain de gênes, génoise, madeleines, quatre-quarts, cakes, pâtisserie aux amandes, petits fours.
— biscotterie.

— pâtes feuilletées levées (croissants) et non levées (vol-auvent).
— pâtes à foncer (pâtes sablées, pâtes brisées sucrées ou non sucrées, type traiteur).

14. Application selon la revendication 13 caractérisée par le fait que l'on incorpore la préparation de l'invention exprimée en sucroglycérides à raison de 0,3% à 2% du poids de farine utilisée.

## Ansprüche für die Vertragsstaaten:BE, CH/LI, DE, GB, IT, LU, NL, SE

1. Neue Zubereitung auf der Grundlage von Zuckerglyceriden in Pulverform, dadurch gekennzeichnet, daß sie außer den Zuckerglyceriden ein Kaseinat und ein Maltodextrin enthält.
2. Neue Zubereitung nach Anspruch 1, dadurch gekennzeichnet, daß sie enthält:

— 20 bis 40% Zuckerglyceride
— 10 bis 50% eines Kaseinats
— 20 bis 60% eines Maltodextrins

wobei die Summe der Bestandteile 100 Gewichtsprozent beträgt.
3. Neue Zubereitung nach einem der Ansprüche 1 bis 2, dadurch gekennzeichnet, daß die verwendeten Zuckerglyceride (Sucroglyceride) Zuckerglyceride von Palmöl, Talg, Schweineschmalz oder Kokosöl sind.
4. Neue Zubereitung nach einem der Ansprüche 1 bis 3, dadurch gekennzeichnet, daß das verwendete Kaseinat Natriumkaseinat ist.
5. Neue Zubereitung nach einem der Ansprüche 1 bis 4, daurch gekennzeichnet, daß das verwendete Maltodextrin ein Dextroseäquivalent zwischen 3 und 40 hat.
6. Neue Zubereitung nach Anspruch 5, dadurch gekennzeichnet, daß das verwendete Maltodextrin ein Dextroseäquivalent zwischen 6 und 30 hat.
7. Verfahren zur Herstellung der neuen Zubereitung auf der Grundlage von pulverförmigen Zuckerglyceriden wie sie in einem der Ansprüche 1 bis 6 beschrieben ist, dadurch gekennzeichnet, daß es darin besteht

— entweder eine wäßrige Emulsion von Zuckerglyceriden, Kaseinat und Maltodextrin zu trocknen,
— oder das Pulvergemisch aus Maltodextrinpulver und Zuckerglyceriden auf Kaseinatträger herzustellen
— oder das Pulvergemisch von Kaseinatpulver und Zuckerglyceriden auf Maltodextrinträger herzustellen.

8. Verfahren nach Anspruch 7, dadurch gekennzeichnet, daß man die Zuckerglyceride schmilzt, unter Rühren bei einer Temperatur von 60 bis 80° C eine wäßrige Lösung von Kaseinat und Maltodextrin herstellt, die geschmolzenen Zuckerglyceride in die wäßrige Lösung von Kaseinat und Maltodextrin unter Rühren einträgt, gegebenenfalls die erhaltene Emulsion homogenisiert und dann trocknet.
9. Verfahren nach Anspruch 7, dadurch gekennzeichnet, daß man die Zuckerglyceride schmilzt, unter Rühren bei einer Temperatur von 60 bis 80° C eine wäßrige Lösung von Kaseinat herstellt, die geschmolzenen Zuckerglyceride in die wäßrige Lösung des Kaseinats unter Rühren einträgt, gegebenenfalls die erhaltene Emulsion homogenisiert und dann trocknet um Zuckerglyceride auf einem Kaseinatträger zu erhalten und diese anschließend mit dem Maltodextrin vermischt.
10. Verfahren nach Anspruch 7, dadurch gekennzeichnet, daß man die Zuckerglyceride schmilzt, unter Rühren bei einer Temperatur von 60 bis 80° C eine wäßrige Lösung von Maltodextrin herstellt, die geschmolzenen Zuckerglyceride in die wäßrige Lösung von Maltodextrin unter Rühren einträgt, die erhaltene Emulsion gegebenenfalls homogenisiert und dann trocknet, um die Zuckerglyceride auf einem Maltodextrinträger zu erhalten und diese anschließend mit dem Kaseinat vermischt.
11. Verfahren nach Anspruch 8, dadurch gekennzeichnet, daß man die Zuckerglyceride in einem Wasserbad oder in einem Doppelmantelkessel bei einer Temperatur von 60 bis 80° C schmilzt, eine wäßrige Lösung von Kaseinat und Maltodextrin mit einem Trockengehalt von 20 bis 40% herstellt, die man unter Rühren bis auf eine Temperatur von 60 bis 80° C erwärmt, die geschmolzenen Zuckerglyceride langsam unter Rühren der wäßrigen Lösung der Träger zugibt, wenn diese die gewünschte Temperatur erreicht hat und das Rühren bis zur Abkühlung auf 40 bis 50° C fortsetzt, die erhaltene Emulsion mit einem Homogenisator homogenisiert, anschließend die erhaltene feine Emulsion in einem Sprühturm mit Hilfe eines heißen Luftstroms versprüht, dessen Temperatur von 150 bis 240° C reicht und nach dem Abkühlen die erfindungsgemäße Zubereitung als Pulver erhält.
12. Verfahren nach Anspruch 9, dadurch gekennzeichnet, daß man die Zuckerglyceride im Wasserbad oder in einem Doppelmantelkessel bei einer Temperatur zwischen 60 und 80° C schmilzt, daß man eine wäßrige Lösung von Kaseinat mit einem Trockengehalt von 20 bis 40% herstellt, die man unter Rühren bis auf Temperatur von 60 bis 80° C erwärmt, daß man langsam unter Rühren die geschmolzenen Zuckerglyceride zu der wäßrigen Lösung des Trägers gibt, wenn diese die gewünschte Temperatur erreicht hat und daß man das Rühren bis zur Abkühlung auf 40 bis 50°C fortsetzt, daß man die erhaltene Emulsion mit einem Homogenisator homogenisiert, daß man anschließend die erhaltene feine Emulsion in einem Sprühturm mit einem heißen Luftstrom versprüht, dessen Temperatur von 150 bis 240°C reicht, daß man nach dem Abkühlen ein Pulver erhält, das mit dem Maltodextrin in einem Pulvermischer vermischt wird und so zu der erfindungsgemäßen pulverförmigen Zubereitung führt.

13. Verfahren nach Anspruch 10, dadurch gekennzeichnet, daß man die Zuckerglyceride in einem Wasserbad oder in einem Doppelmantelkessel bei einer Temperatur zwischen 60 und 80°C schmilzt, daß man eine wäßrige Lösung von Maltodextrin mit einem Trockengehalt von 20 bis 40% herstellt, die man unter Rühren auf eine Temperatur von 60 bis 80°C erwärmt, daß man die geschmolzenen Zuckerglyceride langsam unter Rühren zu der wäßrigen Lösung des Trägers gibt, wenn diese die gewünschte Temperatur erreicht hat und daß man das Rühren bis zum Abkühlen auf 40 bis 50°C fortsetzt, daß man die erhaltene Emulsion in einem Homogenisator homogenisiert, daß man die erhaltene feine Emulsion anschließend durch Versprühen in einem Sprühturm mit Hilfe eines Warmluftstroms trocknet, dessen Temperatur von 150 bis 240°C reicht, daß man nach dem Abkühlen ein Pulver erhält, das mit Kaseinat in einem Pulvermischer vermischt wird und so zu der erfindungsgemäßen pulverförmigen Zubereitung führt.

14. Anwendung der neuen Zubereitung auf der Grundlage von pulverförmigen Zuckerglyceriden nach einem der Ansprüche 1 bis 6 bei der Herstellung eines Teigs in der Getreide-Backindustrie, betreffend:

— Herstellung trockener Kekse: Klassische Zuckerkekse, Butterkekse, Sandteigkekse, Imbißkekse, Sandgebäck, Salzgebäck für Aperitifs, Crackers.
— Industrielle Konditorwaren: Boudoirs, Champagnerboudoirs, Katzenzungen, Löffelbiskuit, Genueser Mandelkuchen, Genueser Kuchen, Madeleine-Gebäck, Sandtorten, englische Kuchen, Mandelgebäck, Petits fours.
— Zwiebackbäckerei.
— Aufgegangener Blätterteig (Hörnchen) oder nicht aufgegangen (große Blätterteigpastete).
— Tortenböden (Sandtorte, gezuckerter oder ungezuckerter Mürbeteig, Teig für Fertigmenüs).

15. Verwendung nach Anspruch 14, dadurch gekennzeichnet, daß man die erfindungsgemäße Zubereitung, gerechnet als Zuckerglycerid, in einer Menge von 0,3 bis 2 Gewichtsprozent des verwendeten Mehls zusetzt.

**Ansprüche für den Vertragsstaat: AT**

1. Verfahren zur Herstellung einer neuen Zubereitung auf der Grundlage von pulverförmigen Zuckerglyceriden, dadurch gekennzeichnet, daß es darin besteht

— entweder eine wäßrige Emulsion von Zuckerglyceriden, Kaseinat und Maltodextrin zu trocknen,
— oder das Pulvergemisch aus Maltodextrinpulver und Zuckerglyceriden auf Kaseinatträger herzustellen
— oder das Pulvergemisch von Kaseinatpulver und Zuckerglyceriden auf Maltodextrinträger herzustellen.

2. Verfahren nach Anspruch 1, dadurch gekennzeichnet, daß man die Zuckerglyceride schmilzt, unter Rühren bei einer Temperatur von 60 bis 80°C, eine wäßrige Lösung von Kaseinat und Maltodextrin herstellt, die geschmolzenen Zuckerglyceride in die wäßrige Lösung von Kaseinat und Maltodextrin unter Rühren einträgt, gegebenenfalls die erhaltene Emulsion homogenisiert und dann trocknet.

3. Verfahren nach Anspruch 1, dadurch gekennzeichnet, daß man die Zuckerglyceride schmilzt, unter Rühren bei einer Temperatur von 60 bis 80°C eine wäßrige Lösung von Kaseinat herstellt, die geschmolzene Zuckerglyceride in die wäßrige Lösung des Kaseinats unter Rühren einträgt, gegebenenfalls die erhaltene Emulsion homogenisiert und dann trocknet, um Zuckerglyceride auf einem Kaseinatträger zu erhalten und diese anschließend mit dem Maltodextrin vermischt.

4. Verfahren nach Anspruch 1, dadurch gekennzeichnet, daß man die Zuckerglyceride schmilzt, unter Rühren bei einer Temperatur von 60 bis 80°C eine wäßrige Lösung von Maltodextrin herstellt, die geschmolzenen Zuckerglyceride in die wäßrige Lösung von Maltodextrin unter Rühren einträgt, die erhaltene Emulsion gegebenenfalls homogenisiert und dann trocknet, um die Zuckerglyceride auf einem Maltodextrinträger zu erhalten und diese anschließend mit dem Kaseinat vermischt.

5. Verfahren nach Anspruch 2, dadurch gekennzeichnet, daß man die Zuckerglyceride in einem Wasserbad oder in einem Doppelmantelkessel bei einer Temperatur von 60 bis 80°C schmilzt, eine wäßrige Lösung von Kaseinat und Maltodextrin mit einem Trockengehalt von 20 bis 40% herstellt, die man unter Rühren bis auf eine Temperatur von 60 bis 80°C erwärmt, die geschmolzenen Zuckerglyceride langsam unter Rühren der wäßrigen Lösung der Träger zugibt, wenn diese die gewünschte Temperatur erreicht hat und das Rühren bis zur Abkühlung auf 40 bis 50°C fortsetzt, die erhaltene Emulsion mit einem Homogenisator homogenisiert, anschließend die erhaltene feine Emulsion in einem Sprühturm mit Hilfe eines heißen Luftstroms versprüht, dessen Temperatur von 150 bis 240°C reicht, und nach dem Abkühlen die erfindungsgemäße Zubereitung als Pulver erhält.

6. Verfahren nach Anspruch 3, dadurch gekennzeichnet, daß man die Zuckerglyceride im Wasserbad oder in einem Doppelmantelkessel bei einer Temperatur zwischen 60 und 80°C schmilzt, daß man eine wäßrige Lösung von Kaseinat mit einem Trockengehalt von 20 bis 40% herstellt, die man unter Rühren bis auf Temperatur von 60 bis 80°C erwärmt, daß man langsam unter Rühren die geschmolzenen Zuckerglyceride zu der wäßrigen Lösung des Trägers gibt, wenn diese die gewünschte Temperatur erreicht hat und daß man das Rühren bis zur Abkühlung auf 40 bis 50°C fortsetzt, daß man die erhaltene Emulsion mit einem Homogenisator homogenisiert, daß man anschließend die erhaltene feine Emulsion in einem Sprühturm mit einem heißen Luftstrom versprüht, dessen Temperatur von 150 bis 240°C reicht, daß man nach dem Abkühlen ein Pulver erhält, das mit dem Maltodextrin in einem Pulvermischer vermischt wird und so zu der erfindungsgemäßen pulverförmigen Zubereitung führt.

7. Verfahren nach Anspruch 4, dadurch gekennzeichnet, daß man die Zuckerglyceride in einem Wasserbad oder in einem Doppelmantelkessel bei einer Temperatur zwischen 60 und 80°C schmilzt, daß man eine wäßrige Lösung von Maltodextrin mit einem Trockengehalt von 20 bis 40% herstellt, die man unter Rühren auf eine Temperatur von 60 bis 80°C erwärmt, daß man die geschmolzenen Zuckerglyceride langsam unter Rühren zu der wäßrigen Lösung des Trägers gibt, wenn diese die gewünschte Temperatur erreicht hat und daß man das Rühren bis zum Abkühlen auf 40 bis 50°C fortsetzt, daß man die erhaltene Emulsion in einem Homogenisator homogenisiert, daß man die erhaltene feine Emulsion anschließend durch Versprühen in einem Sprühturm mit Hilfe eines Warmluftstroms trocknet, dessen Temperatur von 150 bis 240°C reicht, daß man nach dem Abkühlen ein Pulver erhält, das mit Kaseinat in einem Pulvermischer vermischt wird und so zu der erfindungsgemäßen pulverförmigen Zubereitung führt.

8. Verfahren nach einem der Ansprüche 1 bis 7, dadurch gekennzeichnet, daß man die Zuckerglyceride, ein Kaseinat und ein Maltodextrin in einer solchen Menge einsetzt, daß man eine Zubereitung der folgenden Zusammensetzung erhält:

— 20 bis 40% Zuckerglyceride
— 10 bis 50% eines Kaseinats
— 20 bis 60% eine Maltodextrins,

wobei die Summe der Bestandteile 100 Gewichtsprozent ergibt.

9. Verfahren nach einem der Ansprüche 1 bis 8, dadurch gekennzeichnet, daß die verwendeten Zuckerglyceride die Zuckerglyceride von Palmöl, Talg, Schweineschmalz oder Kokosöl sind.

10. Verfahren nach einem der Ansprüche 1 bis 9, dadurch gekennzeichnet, daß das verwendete Kaseinat Natriumkaseinat ist.

11. Verfahren nach einem der Ansprüche 1 bis 10, dadurch gekennzeichnet, daß das verwendete Maltodextrin ein Dextroseäquivalent zwischen 3 und 40 hat.

12. Verfahren nach Anspruch 11, dadurch gekennzeichnet, daß das verwendete Maltodextrin ein Dextroseäquivalent zwischen 6 und 30 hat.

13. Verwendung der neuen Zubereitung auf der Grundlage von pulverförmigen Zuckerglyceriden erhalten nach dem in einem der Patentansprüche 1 bis 12 beschriebenen Verfahren bei der Herstellung eines Teigs in der Getreide-Backindustrie, betreffend:

— Herstellung trockener Kekse: Klassische Zuckerkekse, Butterkekse, Sandteigkekse, Imbißkekse, Sandgebäck, Salzgebäck für Aperitifs, Crackers.
— Industrielle Konditorwaren: Boudoirs, Champagnerboudoirs, Katzenzungen, Löffelbiskuit, Genueser Mandelkuchen, Biskuit, Madeleine-Gebäck, Sandtorten, englische Kuchen, Mandelgebäck, Petits fours.
— Zwiebackbäckerei.
— Aufgegangener Blätterteig (Hörnchen) oder nicht aufgegangenen (große Blätterteigpastete).
— Tortenböden (Sandtorte, gezuckerter oder ungezuckerter Mürbeteig, Teig für Fertigmenüs).

14. Verwendung nach Anspruch 13, dadurch gekennzeichnet, daß man die erfindungsgemäße Zubereitung in einer Menge von 0,3 bis 2 Gewichtsprozent des verwendeten Mehls und gerechnet als Zuckerglycerid zusetzt.

**Claims for the Contracting States: BE, CH/LI, DE, GB, IT, LU, NL, SE**

1. A novel preparation based on sucroglycerides in powder form, characterised in that, besides the sucroglycerides, it comprises a caseinate and a maltodextrin.

2. A novel preparation according to claim 1 characterised in that it comprises:

- from 20 to 40% of sucroglycerides,
- from 10 to 50% of a caseinate, and
- from 20 to 60% of a maltodextrin,

the sum total of the constituents being equal to 100% (by weight).

3. A novel preparation according to one of claims 1 and 2 characterised in that the sucroglycerides used are sucroglycerides of palm oil, tallow, lard and copra oil.

4. A novel preparation according to one of claims 1 to 3 characterised in that the caseinate used is sodium caseinate.

5. A novel preparation according to one of claims 1 to 4 characterised in that the maltodextrin used has a dextrose equivalent of from 3 to 40.

6. A novel preparation according to claim 5 characterised in that the maltodextrin used has a dextrose equivalent of from 6 to 30.

7. A process for producing the novel preparation based on sucroglycerides in powder form as set forth in one of claims 1 to 6 characterised in that it comprises:

- either drying an aqueous emulsion of sucroglycerides, caseinate and maltodextrin,
- or effecting powder-powder mixing of maltodextrin and sucroglycerides on a caseinate carrier,
- or effecting powder-powder mixing of caseinate and sucroglycerides on a maltodextrin carrier.

8. A process according to claim 7 characterised in that it comprises melting the sucroglycerides; preparing an aqueous solution of caseinate and maltodextrin with agitation and at a temperature of from 60 to 80° C; introducing the molten sucroglycerides into the aqueous solution of caseinate and maltodextrin, which is maintained in a condition of agitation; possibly homogenising the resulting emulsion, and then drying it.

9. A process according to claim 7 characterised in that it comprises melting the sucroglycerides; preparing an aqueous solution of caseinate with agitation and at a temperaturen of from 60 to 80° C; introducing the molten sucroglycerides into the aqueous solution of caseinate, which is maintained in a condition of agitation; possibly homogenising the resulting emulsion, and then drying it in order to produce the sucroglycerides on a caseinate carrier; and then mixing them with maltodextrin.

10. A process according to claim 7 characterised in that it comprises melting the sucroglycerides; preparing an aqueous solution of maltodextrin with agitation and at a temperature of from 60 to 80° C; introducing the molten sucroglycerides into the aqueous solution of maltodextrin, which is maintained in a condition of agitation; possibly homogenising the resulting emulsion, and then drying it in order to produce the sucroglycerides on a maltodextrin carrier; and then mixing them with caseinate.

11. A process according to claim 8 characterised in that the sucroglycerides are melted in a water bath or in a doublejacket vessel, at a temperature of from 60 to 80° C; that an aqueous solution of caseinate and maltodextrin is prepared, with a dry matter content of from 20 to 40%, which is heated, with agitation, at up to a temperaturen of from 60 to 80° C; that the molten sucroglycerides are added slowly and with agitation to the aqueous solution of the carriers, when it reached the desired temperature, and that agitation is continued until the temperature falls to about 40 to 50° C; that the resulting emulsion is homogenised by passing it through a homogeniser; that the fine emulsion produced is then dried by atomisation in an atomisation tower by means of a flow of hot air, the temperature of which varies from 150 to 240° C; and that after cooling the preparation of the invention is obtained, in powder form.

12. A process according to claim 9 characterised in that the sucroglycerides are melted in a water bath or in a doublejacket vessel, at a temperature of from 60 to 80° C; that an aqueous solutions of caseinate is prepared, with a dry matter content of from 20 to 40%, which is heated, with agitation, at up to a temperature of from 60 to 80° C; that the molten sucroglycerides are added slowly and with agitation to the aqueous solution of the carrier, when it reached the desired temperature, and that agitation is continued until the temperature falls to about 40 to 50° C; that the resulting emulsion is homogenised by passing it through a homogeniser; that the fine emulsion produced is then dried by atomisation in an atomisation tower by means of a flow of hot air, the temperature of which varies from 150 to 240° C; and that after cooling, there is produced a powder which is mixed with maltodextrin in a powder mixer thereby resulting in the preparation of the invention, in powder form.

13. A process according to claim 10 characterised in that the sucroglycerides are melted in a water bath or in a doublejacket vessel, at a temperature of from 60 to 80° C; that an aqueous solution of maltodextrin is prepared, with a dry matter content of from 20 to 40%, which is heated, with agitation, at up to a temperature of from 60 to 80° C; that the molten sucroglycerides are added slowly and with agitation to the aqueous solution of the carrier, when it reached the desired temperature, and that agitation is continued until the temperature falls to about 40 to 50° C; that the resulting emulsion is homogenised by passing it through a homogeniser; that the fine emulsion produced is then dried by atomisation in an atomisation tower by means of a flow of hot air, the temperature of which varies from 150 to 240°C; and that after cooling, there is produced a powder which is mixed with caseinate in a powder mixer thereby resulting in the preparation of the invention, in powder form.

14. Use of the novel preparation based on sucroglycerides in powder form in accordance with one of claims 1 to 6 in the course of producing a pastry in the cereal baking industry, concerning:

— dry biscuit trade: sweet biscuits of conventional type, petit beurre biscuits, girdle cakes, snacks, shortbread biscuits, salt biscuits for aperitifs and crackers;
— industrial pastry making: boudoirs, champagne, langue-dechat biscuits, light finger biscuits, geneose pastry, geneose cake, madeleines, rich Madiera cake, fruitcakes, almond pastry, petit fours,
— dry sponge fingers,
— leaven flaky pastries (croissants) and unleaven flaky pastries (vol-au-vents),
— lining pastries (shortbread pastries, sweetened or unsweetened short pastry, catering type).

15. Use according to claim 14 characterised by incorporating the preparation of the invention, expressed in respect of sucroglycerides, in a proportion of from 0.3% to 2% by weight of flour used.

**Claims for the Contracting State: AT**

1. A process for producing a novel preparation based on sucroglycerides in powder form characterised in that it comprises:

— either drying an aqueous emulsion of sucroglycerides, caseinate and maltodextrin,
— or effecting powder-powder mixing of maltodextrin and sucroglycerides on a caseinate carrier,
— or effecting powder-powder mixing of caseinate and sucroglycerides on a maltodextrin carrier.

2. A process according to claim 1 characterised in that it comprises melting the sucroglycerides; preparing an aqueous solution of caseinate and maltodextrin with agitation and at a temperature of from 60 to 80°C; introducing the molten sucroglycerides into the aqueous solution of caseinate and maltodextrin, which is maintained in a condition of agitation; possibly homogenising the resulting emulsion, and then drying it.

3. A process according to claim 1 characterised in that it comprises melting the sucroglycerides; preparing an aqueous solution of caseinate with agitation and at a temperature of from 60 to 80°C; introducing the molten sucroglycerides into the aqueous solution of caseinate, which is maintained in a condition of agitation; possibly homogenising the resulting emulsion, and then drying it in order to produce the sucroglycerides on a caseinate carrier; and then mixing them with maltodextrin.

4. A process according to claim 1 characterised in that it comprises melting the sucroglycerides; preparing an aqueous solution of maltodextrin with agitation and at a temperature of from 60 to 80°C; introducing the molten sucroglycerides into the aqueous solution of maltodextrin, which is maintained in a condition of agitation; possibly homogenising the resulting emulsion, and then drying it in order to produce the sucroglycerides on a maltodextrin carrier; and then mixing them with caseinate.

5. A process according to claim 2 characterised in that the sucroglycerides are melted in a water bath or in a double-jacket vessel, at a temperature of from 60 to 80°C; that an aqueous solution of caseinate and maltodextrin is prepared, with a dry matter content of from 20 to 40%, which is heated, with agitation, at up to a temperature of from 60 to 80°C; that the molten sucroglycerides are added slowly and with agitation to the aqueous solution of the carriers, when it reached the desired temperature, and that agitation is continued until the temperature falls to about 40 to 50°C; that the resulting emulsion is homogenised by passing it through a homogeniser; that the fine emulsion produced is then dried by atomisation in an atomisation tower by means of a flow of hot air, the temperature of which varies from 150 to 240°C; and that after cooling the preparation of the invention is obtained, in powder form.

6. A process according to claim 3 characterised in that the sucroglycerides are melted in a water bath or in a doublejacket vessel, at a temperature of from 60 to 80°C; that an aqueous solution of caseinate is prepared, with a dry matter content of from 20 to 40%, which is heated, with agitation, at up to a temperature of from 60 to 80°C; that the molten sucroglycerides are added slowly and with agitation to the aqueous solution of the carrier, when it reached the desired temperature, and that agitation is continued until the temperaturen falls to about 40 to 50°C; that the resulting emulsion is homogenised by passing it through a homogeniser; that the fine emulsion produced is then dried by atomisation in an atomisation tower by means of a flow of hot air, the temperaturen of which varies from 150 to 240°C; and that after cooling, there is produced a powder which is mixed with maltodextrin in a powder mixer thereby resulting in the preparation of the invention, in powder form.

7. A process according to claim 4 characterised in that the sucroglycerides are melted in a water bath or in a doublejacket vessel, at a temperature of from 60 to 80°C; that an aqueous solution of maltodextrin is prepared, with a dry matter content of from 20 to 40%, which is heated, with agitation, at up to a temperature of from 60 to 80° C; that the molten sucroglycerides are added slowly and with agitation to the aqueous solution of the carrier, when it reached the desired temperature, and that agitation is continued until the temperature falls to about 40 to 50° C; that the resulting emulsion is homogenised by passing it through a homogeniser; that the fine emulsion produced is then dried by atomisation in an atomisation tower by means of a flow of hot air, the temperaturen of which varies from 150 to 240° C; and that after cooling, there is produced a powder which is mixed with caseinate in a powder mixer thereby resulting in the preparation of the invention, in powder form.

8. A process according to one of claims 1 to 7 characterised by using sucroglycerides, a caseinate and a maltodextrin in an amount such as to produce a preparation of the following composition:

— from 20 to 40% of sucroglycerides,
— from 10 to 50% of a caseinate,
— from 20 to 60% of a maltodextrin,

the sum total of the constituents being equal to 100% (by weight).

9. A process according to one of claims 1 to 8 characterised in that the sucroglycerides used are sucroglycerides of palm oil, tallow, lard and copra oil.

10. A process according to one of claims 1 to 9 characterised in that the caseinate used is sodium caseinate.

11. A process according to one of claims 1 to 10 characterised in that the maltodextrin used has a dextrose equivalent of from 3 to 40.

12. A process according to claim 11 characterised in that the maltodextrin used has a dextrose equivalent of from 6 to 30.

13. Use of a novel preparation based on sucroglycerides in powder form which is produced in accordance with the process described in one of claims 1 to 12 in the course of producing a pastry in the cereal baking industry, concerning:

— dry biscuit trade: sweet biscuits of conventional type, petit beurre biscuits, girdle cakes, snacks, shortbread biscuits, salt biscuits for aperitifs and crackers;
— industrial pastry making: boudoirs, champagne, langue-de-chat biscuits, light finger biscuits, geneose pastry, geneose cake, madeleines, rich Madiera cake, fruitcakes, almond pastry, petit fours,
— dry sponge fingers,
— leaven flaky pastries (croissants) and unleaven flaky pastries (vol-au-vents),
— lining pastries (shortbread pastries, sweetened or unsweetened short pastry, catering type).

14. Use according to claim 13 characterised by incorporating the preparation of the invention, expressed in respect of sucroglycerides, in a proportion of from 0.3% to 2% by weight of flour used.